# EUROPÄISCHE PATENTSCHRIFT

(11) **EP 3 389 891 B1**
(45) Veröffentlichungstag und Bekanntmachung des Hinweises auf die Patenterteilung: **20.10.2021**
(21) Anmeldenummer: 16809698.0
(22) Anmeldetag: 06.12.2016
(51) Int. Cl.: B21K 5/04, B23B 51/02, B23P 15/32, E21B 10/44, B21D 11/14, B21H 7/18

(54) **HERSTELLUNGSVERFAHREN FÜR EINEN BOHRER UND WERKZEUGGERÜST**
METHOD OF MANUFACTURING A DRILL AND TOOL SCAFFOLD
PROCEDE DE FABRICATION D'UN FORET ET PORTE-OUTIL

(30) Priorität: 15.12.2015 EP 15200036
(43) Veröffentlichungstag der Anmeldung: 24.10.2018
(73) Patentinhaber: Hilti Aktiengesellschaft, 9494 Schaan (LI)
(72) Erfinder: DOMANI, Guenter, 88138 Weissensberg (DE); PETERS, Carsten, 9468 Sax (CH); SCHROEDER, Florian, 7304 Maienfeld (CH)
(74) Vertreter: Hilti Aktiengesellschaft Corporate Intellectual Property
(86) Internationale Anmeldenummer: PCT/EP2016/079815
(87) Internationale Veröffentlichungsnummer: WO 2017/102417

(56) Entgegenhaltungen:
- WO-A1-2016/202768
- DE-A1- 1 943 586
- DE-A1-102008 024 017
- DE-B2- 1 943 586
- DE-C- 456 723

## Beschreibung

### GEBIET DER ERFINDUNG

Die vorliegende Erfindung betrifft ein Herstellungsverfahren für Bohrer und ein Werkzeuggerüst zum Ausführen eines Herstellungsverfahrens für einen Bohrer, wie aus DE 19 43 586 A1 bekannt.

Aus DE 19 43 586 A1 ist ein Verfahren zum Herstellen eines Bohrers mit einer Wendel bekannt. In einem Schritt wird zuerst ein Halbling mit geraden Rippen hergestellt. In einem weiteren Schritt wird ein Ende des Halblings verdreht, wodurch zwischen dem Ende und dem anderen Ende eine Wendel entsteht.

### OFFENBARUNG DER ERFINDUNG

Das erfindungsgemäße Herstellungsverfahren für einen Bohrer mit einer Wendel hat die folgenden Schritte: kaltes Umformen eines stabförmigen Rohlings in einen Halbling mit drei oder mehr geradlinigen, längs einer Längsachse des Halblings verlaufender Längsstege; Einführen der Längsstege des Halblings in eine erste Matrize und eine zweite Matrize in einer Arbeitsrichtung, wobei die erste Matrize in einer Drehrichtung um die Längsachse an den Längsstegen anliegt und die zweite Matrize entgegen der Drehrichtung an den Längsstegen anliegt; Verschwenken der ersten Matrize in der Drehrichtung gegenüber der zweiten Matrize zum Tordieren der Längsstege zwischen der ersten Matrize und der zweiten Matrize; Ziehen der Längsstege des Halblings durch die verschwenkte erste Matrize und die zweite Matrize entgegen der Arbeitsrichtung zum Verdrallen der Längsstege und Anbringen eines Bohrkopfs an dem in der Arbeitsrichtung hinteren Ende.

Das erfindungsgemäße Verfahren ermöglicht eine hohe Automatisierung bei der Herstellung von Bohrwendeln beliebiger Länge und variierender Wendelsteigung.

Ein erfindungsgemäßes Werkzeuggerüst zum Herstellen einer Wendel für einen Bohrer hat in einer Arbeitsrichtung aufeinanderfolgend auf einer Arbeitsachse angeordnet eine erste Matrize und zweite Matrize. Die erste Matrize hat an einer von der zweiten Matrize abgewandten Vorderseite einen sternförmigen hohlen Querschnitt, der dem Negativbild des Querschnitts der Wendel des Bohrers entspricht. Die zweite Matrize hat einen sternförmigen hohlen Querschnitt, der dem Negativbild des Querschnitts der Wendel des Bohrers entspricht. Ein Schwenkantrieb kann die erste Matrize gegenüber der zweiten Matrize in eine Grundstellung verschwenken, in welcher der sternförmige hohle Querschnitt der Vorderseite der ersten Matrize und der sternförmige hohle Querschnitt der zweiten Matrize gleich orientiert sind. Der Schwenkantrieb kann die erste Matrize aus der Grundstellung in die Drehrichtung um einen Schwenkwinkel verschwenken. Ein axialer Antrieb kann einen Halbling längs der Arbeitsachse aus der ersten Matrize und der zweiten Matrize ziehen.

In einer bevorzugten Ausführungsform nimmt der hohle Querschnitt der ersten Matrize längs der Arbeitsrichtung zumindest entgegen der Drehrichtung zu. Der zunehmende Querschnitt erlaubt die erste Matrize stabiler mit einer größeren Länge, d.h. Abmessung längs der Arbeitsachse, auszubilden.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: einen Querschnitt durch einen Förderbereich des Bohrers in der Ebene II-II
- Fig. 3: einen Querschnitt durch einen Befestigungsbereich des Bohrers in der Ebene III-III
- Fig. 4: einen Querschnitt durch einen Auslaufbereich des Bohrers in der Ebene IV-IV
- Fig. 5: eine schematische Darstellung des Umarbeiten eines Rohlings zu einem Halbling
- Fig. 6: einen Querschnitt durch den Halbling in der Ebene VI-VI
- Fig. 7: einen Schnitt durch ein Walzgerüst in der Ebene VII-VII
- Fig. 8: eine schematische Darstellung des Umformens des Halblings in eine Wendel
- Fig. 9: eine Umformmatrize
- Fig. 10: eine Stützmatrize
- Fig. 11: eine Vorderseite der Umformmatrize
- Fig. 12: eine Rückseite der Umformmatrize
- Fig. 13: einen Schnitt durch die Umformmatrize in der Ebene XIII-XIII
- Fig. 14: eine Vorderseite der Stützmatrize
- Fig. 15: einen durch die Stützmatrize in der Ebene XV-XV

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

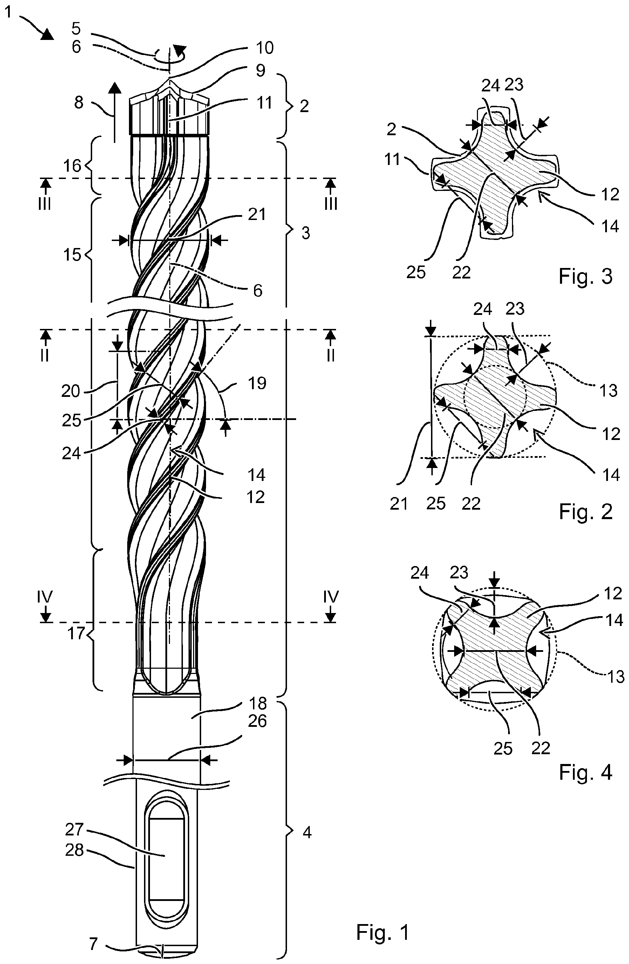

Fig. 1 zeigt einen beispielhaften Bohrer **1.** Der Bohrer **1** hat einen Bohrkopf **2,** eine Wendel **3** und ein Einsteckende **4.** Der Bohrer **1** ist beispielsweise für den Abbau von mineralischen Werkstoffen, z.B. armiertem Beton, ausgelegt. Der Bohrer **1** wird im Betrieb in einem Drehsinn **5** um seine Längsachse **6** (Bohrerachse) gedreht. Der Bohrer **1** kann dazu in eine Handwerkzeugmaschine eingesetzt werden, welche einen entsprechenden Drehantrieb aufweist. Ein Schlagwerk der Handwerkzeugmaschine schlägt periodisch auf das freie Ende **7** des Einsteckendes **4.** Die Stoßwelle der Schläge läuft durch die Wendel **3** in Schlagrichtung **8** zu dem Bohrkopf **2.** Der Bohrkopf **2** zertrümmert den Werkstoff. Die Drehbewegung stellt erstens sicher, dass der Bohrkopf **2** unter verschiedenen Orientierungen auf den Untergrund aufschlägt und das Bohrloch gleichmäßig ausgeschlagen wird, und bewirkt zweitens den Abtransport des Bohrguts aus dem Bohrloch mittels der Wendel **3.**

Der beispielhafte Bohrkopf **2** hat vier Meißelkanten **9.** Die Meißelkanten **9** laufen an einer Spitze **10** auf der Bohrerachse **6** zusammen. Die Spitze **10** ist vorzugsweise der in Schlagrichtung **8** höchste Punkt, welche somit beim Bohren zuerst den Werkstoff kontaktiert. Die Meißelkanten **9** können in radialer Richtung von außen zur Bohrerachse **6** hin längs der Schlagrichtung **8** ansteigen. Die Meißelkanten **9** weisen alle in die Schlagrichtung **8.** Die Meißelkante **9** wird durch jeweils eine im Drehsinn vorauslaufende Facette und eine nachlaufende Facette gebildet, die beide in die Schlagrichtung **8** weisen. Die beiden Facetten sind zueinander geneigt, der Dachwinkel an der Meißelkante **9** ist größer als 45 Grad, vorzugsweise größer 60 Grad und geringer als 120 Grad. Die Meißelkanten **9** können alle gleich ausgestaltet sein, oder paarweise verschieden sein. Der Bohrkopf **2** hat vier Abbruchkanten **11,** die parallel zu der Bohrerachse **6** verlaufen. Die Abbruchkanten **11** gehen in die Meißelkanten **9** über. Die Abbruchkanten **11** definieren den Durchmesser des Bohrkopfs **2.** Die Anzahl der Meißelkanten **9** und der Abbruchkanten **11** kann in Abhängigkeit des Durchmessers des Bohrers **1** gewählt sein. Beispielsweise kann bei einem Bohrer **1** geringen Durchmessers der Bohrkopf **2** zwei Meißelkanten **9,** ein Bohrkopf **2** großen Durchmessers mehr als vier Meißelkanten **9** und entsprechende Zahl von Abbruchkanten **11** aufweisen.

Der Bohrkopf **2** ist vorzugsweise aus einem gesinterten Werkstoff, insbesondere Wolframkarbid, hergestellt. Die Meißelkanten **9** und die Abbruchkanten **11** sind vorzugsweise monolithisch zusammenhängend, insbesondere ohne Fügezone miteinander verbunden.

Die Wendel **3** des Bohrers **1** hat beispielsweise vier Wendelstege **12.** Die Anzahl der Wendelstege **12** ist vorzugsweise gleich der Anzahl der Meißelkanten **9.** Die Wendelstege **12** laufen längs der Bohrerachse **6** mehrfach um diese Bohrerachse **6** um. Die Wendelstege **12** beschreiben beim Drehen des Bohrers **1** eine zylindrische Einhüllende **13.** Jeweils benachbarte Wendelstege **12** schließen zwischen sich eine Wendelnut **14** ein, die in radialer Richtung durch die Einhüllende **13** als geometrisch begrenzt angesehen wird. Das Bohrgut wird in den Wendelnuten **14** durch die Wendelstegen **12** längs der Bohrerachse **6** transportiert.

Die Wendel **3** hat längs der Bohrerachse **6** verschiedene Abschnitte, die sich um verschiedenen Anforderungen gerecht zu werden, in der Steigung der Wendelstege **12** unterscheiden. Ein Förderbereich **15** ist der dominierende Abschnitt und dient dem Fördern des Bohrguts. Der Förderbereich **15** erstreckt sich typischerweise um mehr als 80 % der Länge der Wendel **3.** Der Förderbereich **15** kann unmittelbar an den Bohrkopf **2** angrenzen, alternativ ist zwischen dem Bohrkopf **2** und dem Bohrkopf **2** ein Befestigungsbereich **16,** welcher an besondere Erfordernisse für die Befestigung des Bohrkopfs **2** an die Wendel **3** ausgelegt ist. Die Wendel **3** schließt an ihrem zum Einsteckende **4** weisenden Ende **7** mit einem Auslaufbereich **17** ab. Der Auslaufbereich **17** geht in den zylindrischen Schaft **18** des Einsteckendes **4** über.

In dem Förderbereich **15** liegt eine Wendelsteigung **19** der Wendelstege **12,** d.h. eine Neigung der Wendelstege **12** gegenüber einer zu der Bohrerachse **6** senkrechten Ebene, in einem Bereich zwischen 35 Grad und 70 Grad. Die Wendelsteigung **19** der Wendelstege **12** ist vorzugsweise über den gesamten Förderbereich **15** konstant. Die konstante Wendelsteigung **19** stellt einen gleichmäßigen Transport des Bohrguts in der Wendel **3** sicher. Die konstante Wendelsteigung **19** bedingt eine konstante Ganghöhe **20** der Wendel **3.** In einer alternativen Ausgestaltung können die Wendelsteigung **19** und die Ganghöhe **20** in Schlagrichtung **8** zunehmen. Die Wendel **3** hat in dem Förderbereich **15** einen längs der Bohrerachse **6** gleichbleibenden Querschnitt (Fig. 2), der sich kontinuierlich um die Bohrerachse **6** dreht. Der Querschnitt kann unter Anderem durch den Wendeldurchmesser **21,** einen Kerndurchmesser **22,** eine Höhe der Wendelstege **12** und Tiefe **23** der Wendelnuten **14,** eine mittlere Stärke **24** der Wendelstege **12** und eine mittlere Breite **25** der Wendelnuten **14** beschrieben werden. Der Wendeldurchmesser **21** ist der Durchmesser des Bohrers **1** oder der Einhüllenden **13** der Wendel **3,** d.h. des kleinsten Hohlzylinders, in welchem die Wendel **3** um ihrer Bohrerachse **6** gedreht werden kann. Der Kerndurchmesser **22** ist der Durchmesser des größten Kreises, der sich vollständig in den Querschnitt der Wendel **3** einschreiben lässt. Die mittlere Stärke **24** und die mittlere Breite **25** können zum Beispiel auf halber Höhe der Wendelstege **12** bestimmt werden. Der Kerndurchmesser **22,** die Höhe der Wendelstege **12** und die Tiefe **23** der Wendelnuten **14** bleibt längs des gesamten Förderbereichs **15** konstant. Vorzugsweise bleiben auch die mittlere Stärke **24** der Wendelstege **12** und die mittlere Breite **25** der Wendelnuten **14** längs des gesamten Förderbereichs **15** konstant.

Der Förderbereich **15** geht bei dem beispielhaft dargestellten Bohrer **1** in Schlagrichtung **8** in den Befestigungsbereich **16** über. Der Bohrkopf **2** ist auf der vorzugsweise ebenen Stirnseite des Befestigungsbereichs **16** angelötet oder angeschweißt. Die Wendelsteigung **19** nimmt in dem Befestigungsbereich **16** in Richtung zu dem Bohrkopf **2** kontinuierlich zu. Vorzugsweise geht die Wendelsteigung **19** in eine zu der Bohrerachse **6** parallele Orientierung über, d.h. die Wendelsteigung **19** erreicht 90 Grad. Der Querschnitt der Wendel **3** in dem Befestigungsbereich **16** kann über dessen gesamte Länge konstant bleiben (vergrößert in Fig. 3). Vorzugsweise ist der Querschnitt des Befestigungsbereichs **16** deckungsgleich zu dem Querschnitt in dem Förderbereich **15.** Insbesondere sind vorzugsweise der Kerndurchmesser **22,** die Höhe der Wendelstege **12** und die Tiefe **23** der Wendelnuten **14** gleichbleibend. Eine Oberfläche der Wendelstege **12** und der Wendelnuten **14** ist glatt, insbesondere frei von einer für spanende Verfahren typischen Rauheit und deren Riefen.

Der Übergang zwischen der Wendelsteigung **19** in dem Förderbereich **15** zu der parallelen Orientierung am Bohrkopf **2** erfolgt kontinuierlich und vorzugsweise mit einer gleichmäßigen Änderungsrate der Wendelsteigung **19** entlang der Schlagrichtung **8.** Die Wendelsteigung **19** erhöht sich vorzugsweise im Bereich zwischen 0,5 Grad und 2 Grad für jedes Grad, das sich der Wendelsteg **12** um die Bohrerachse **6** windet. Die Änderungsrate ist durchgehend gering und stetig, die Wendel **3** weist keinen Knick oder eine sonstige abrupte Änderung der Wendelsteigung **19** auf.

In dem Auslaufbereich **17** der Wendel **3** gehen die Wendelstege **12** aus dem Förderbereich **15** in das zylindrische Einsteckende **4** über. Die Wendelsteigung **19** nimmt in dem Auslaufbereich **17** vorzugsweise kontinuierlich zu, bis die Wendelstege **12** parallel zu der Bohrerachse **6** verlaufen. Der Querschnitt der Wendel **3** kann solange gleich bleiben, bis Wendelstege **12** parallel zu der Bohrerachse **6** ausgerichtet sind (vergrößert in Fig. 4). Dann ändert sich der Querschnitt kontinuierlich entgegen der Schlagrichtung **8** an einen Kreis mit dem Durchmesser **26** des Einsteckendes **4,** sprich dem Querschnitt des Einsteckendes **4** an. Die Wendelstege **12** werden flacher und verlieren an radialer Abmessung; die Wendelnuten **14** werden flacher und steigen in radialer Richtung an.

Der Übergang zwischen der Wendelsteigung **19** in dem Förderbereich **15** zu der parallelen Orientierung am Auslaufbereich **17** erfolgt kontinuierlich und vorzugsweise mit einer gleichmäßigen Änderungsrate der Wendelsteigung **19** entgegen der Schlagrichtung **8.** Die Wendelsteigung **19** erhöht sich vorzugsweise zwischen 0,5 Grad und 2 Grad für jedes Grad, das sich der Wendelsteg **12** um die Bohrerachse **6** windet.

Das beispielhafte Einsteckende **4** des Bohrers **1** ist für die Verwendung von drehmeißelnden Handwerkzeugmaschinen ausgelegt. Das Einsteckende **4** hat eine im Wesentlichen zylindrische Form mit einem Durchmesser **26.** Das Einsteckende **4** hat zwei geschlossene Nuten **27,** in welchen Verriegelungselemente der Handwerkzeugmaschine radial eingreifen und längs der Bohrerachse **6** gleiten können. Zur Bohrerachse **6** längs ausgerichtete Rillen **28** ermöglichen ein Einleiten eines Drehmoments von der Handwerkzeugmasch ine.

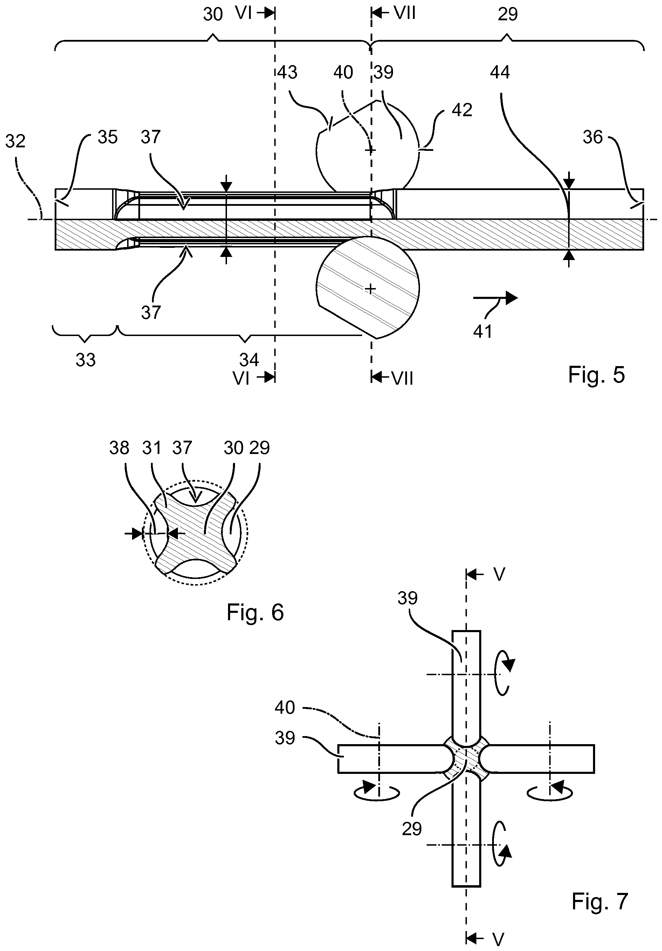

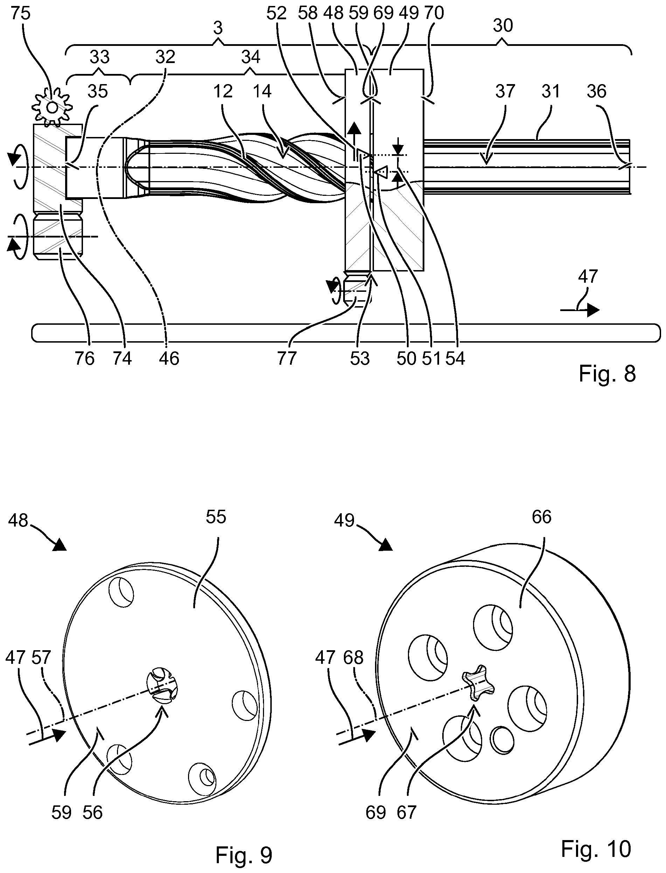

Ein Herstellungsverfahren des beispielhaften Bohrers **1** beinhaltet zwei, vorzugsweise unmittelbar aufeinanderfolgende, Verfahrensschritte. Ein Rohling **29** wird mit einem ersten kalten Umformverfahren in einen Halbling **30** mit Längsstegen **31** umgeformt (Fig. 5). Die so erstellten Längsstege **31** werden in einem zweiten kalten Umformverfahren zu einer Wendel **3** verdrallt (Fig. 8). Anschließend wird ein Bohrkopf **2** angefügt.

Ein beispielhaftes Herstellungsverfahren beginnt mit einem stabförmigen Rohling **29.** Der Rohling **29** hat eine einfache zylindrische oder konvex prismatische Grundform. Vorzugsweise ist der Querschnitt senkrecht zu der Längsachse **32** des Rohlings **29** kreisförmig, leicht elliptisch oder konvex polygonal, z.B. hexagonal. Vorzugsweise ist der Querschnitt über die gesamte Länge des Rohlings **29** konstant. Der Rohling **29** hat vorzugsweise eine Querschnittsfläche, die etwa gleich oder um bis zu 50 % größer als die Querschnittsfläche der Wendel **3** ist. Die Länge des Rohlings **29** ist gleich oder um bis zu 20 % geringer wie die Länge des Bohrers **1** ohne dem Bohrkopf **2,** d.h. der Gesamtlänge der Wendel **3** und des Einsteckendes **4.** Der Rohling **29** besteht vorzugsweise aus einem niedriglegiertem Stahl.

Der Rohling **29** wird einem ersten Walzgerüst zugeführt und in einen Halbling **30** kalt umgeformt. Fig. 5 zeigt rechts den ursprünglichen Rohling **29** und links den aus dem Rohling **29** entstehenden Halbling **30.** Der Halbling **30** teilt sich in einen zusammenhängenden unstrukturierten Abschnitt **33** und einen zusammenhängenden, sternförmig strukturierten (Stern-) Abschnitt **34** auf. Unstrukturiert bedeutet in dem Zusammenhang gegenüber der Urform des Rohlings **29** durch das nachfolgend beschriebene Verfahren unverändert. Der unstrukturierte Abschnitt **33** ist daher im Wesentlichen weiterhin zylindrisch oder konvex prismatisch. Der sternförmig strukturierte Abschnitt **34** kann durch das nachfolgend beschriebene Verfahren erhalten werden. Die Sternform des sternförmig strukturierten Abschnitts **34** bezieht sich auf dessen Querschnitt (Fig. 6) senkrecht zu seiner Längsachse **32.** Der Querschnitt hat die Form eines Sterns, vorzugsweise eines regelmäßigen Sterns. Ein Stern ist ein Polygon mit abwechselnd konkaven Ecken, d.h. einem Innenwinkel von größer 180 Grad, und konvexen Ecken (Spitzen), d.h. einem Innenwinkel von weniger als 180 Grad. Die Ecken sind vorliegend typischerweise abgerundet oder abgeflacht. Die von dem unstrukturierten Abschnitt **33** gebildete Stirnseite des Halblings **30** wird nachfolgend als vordere Stirnseite **35** bezeichnet und die von dem sternförmigen Abschnitt **34** gebildete Stirnseite des Halblings **30** wird nachfolgend als hintere Stirnseite **36** bezeichnet.

Der Sternabschnitt **34** des Halblings **30** hat drei oder mehr Längsstege **31** und zwischen den benachbarten Längsstegen **31** angeordnete Längsnuten **37.** Die Längsstege **31** und die Längsnuten **37** verlaufen parallel zu der Längsachse **32** des Halblings **30.** Der Sternabschnitt **34** hat einen längs der Längsachse **32** des Halblings **30** konstanten sternförmigen Querschnitt (vergrößert in Fig. 6), abgesehen von einem kurzen Übergangsbereich zu dem unstrukturierten Abschnitt **33.** Die Längsstege **31** und Längsnuten **37** beginnen an der vorderen Stirnseite **36** des Halblings **30,** die Längsnuten **37** sind somit an der vorderen Stirnseite **36** offen. Die Längsstege **31** sind gleichmäßig um die Längsachse **32** verteilt angeordnet. Beispielsweise sind die vier Längsstege **31** in Winkelabständen von 90 Grad angeordnet. Die beispielhaften Längsstege **31** haben alle die gleiche radiale Abmessung (Höhe). In einer Ausgestaltung mit einer geradzahligen Anzahl von Längsstegen haben jeweils die Längsstege eines Paars aus diametral gegenüberliegenden Längsstegen die gleiche Höhe, jedoch kann die Höhe zweier in Umfangsrichtung benachbarter Längsstege **31** verschieden sein. Eine Tiefe **38** der Längsnuten **37** entspricht der Tiefe **23** der herzustellenden Wendel **3.**

Vorzugsweise wird der Halbling **30** längsgewalzt. Ein Walzgerüst hat mehrere Walzen **39,** die parallel zu der Längsachse **32** des Rohlings **29** abrollen. Die Walzen **39** rotieren um zu der Längsachse **32** senkrechte Drehachsen **40.** Die Walzen **39** erzeugen die zu der Längsachse **32** parallele Längsnuten **37** in dem Halbling **30.** Das beim Walzen **39** verdrängte Material bildet zwischen den benachbarten Längsnuten **37** jeweils einen der zu der Längsachse **32** parallelen Längssteg **31** aus. Der unstrukturierte Abschnitt **33** des Rohlings **29** bleibt unverändert und bildet die Basis für das Einsteckende **4.**

Der Rohling **29** wird kalt in den Halbling **30** umgeformt. Der Rohling **29** ist auf Raumtemperatur, wenn er den Walzen **39** zugeführt wird. Der Rohling **29** kann sich aufgrund des Walzens etwas erwärmen, jedoch bleibt seine Temperatur weit unter der Rekristallisationstemperatur des Stahls. Typischerweise erfolgt das Walzen **39** bei einer Temperatur von 10 Grad Celsius (°C) bis 80°C. Die Oberfläche des strukturierten Abschnitts **34** wird durch das kalte Umformen verfestigt und verliert an Duktilität gegenüber dem Rohling **29.**

Ein beispielhaftes Walzgerüst hat für jede der Längsnuten **37** eine Walze **39,** hier beispielhaft vier. Ein alternatives Walzgerüst kann mit einer Walze simultan zwei Längsnuten erzeugen und hat demzufolge nur halb so viele Walzen. Die Walzen **39** sind so positionierbar, dass der Rohling **29** ohne diesen umzuformen zwischen die Walzen **39** bis zu einem Ausgangspunkt eingeführt werden kann. Das Walzen **39** der Längsnuten **37** beginnt an dem Ausgangspunkt zwischen der vorderen Stirnseite **35** und der hinteren Stirnseite **36** und verläuft in einer Walzrichtung **41** von dem Ausgangspunkt zu der hinteren Stirnseite **36.** Der Abschnitt **33** zwischen der vorderen Stirnseite **35** und dem Ausgangspunkt bleibt unstrukturiert. Der Abschnitt **34** zwischen dem Ausgangspunkt und der hinteren Stirnseite **36** wird sternförmig strukturiert. Das Walzen **39** beginnt mit den geschlossenen Enden der Längsnuten **37** und endet mit den offenen Enden der Längsnuten **37.** Der Rohling **29** wird beim Walzen **39** durch die Walzen **39** entgegen der Walzrichtung **41** relativ zu dem Walzgerüst bewegt.

Die beispielhaften Walzen **39** haben entlang ihres Umfangs ein kreisförmiges Segment **42** zum Umformen des Rohlings **29** und ein flaches Segment **43.** Die Walzen **39** werden zum Einführen des Rohlings **29** mit den flachen Segmenten **43** dem Rohling **29** zugewandt ausgerichtet. Der Abstand der flachen Segmente zu der Längsachse **32** ist größer als der halbe Durchmesser **44** (Radius) des Rohlings **29,** so dass der Rohling **29** ohne die Walzen **39** zu berühren längs der Längsachse **32** zwischen die Walzen **39** eingeführt wird. Der Rohling **29** wird mit dem nicht zu bearbeiteten Abschnitt **33** in Vorschubrichtung **41** nach den Walzen **39** angeordnet. Die Walzen **39** werden zum Umformen des Rohlings **29** in den Halbling **30** in Eingriff mit dem Rohling **29** gebracht. Bei den beispielhaften Walzen **39** erfolgt dies durch einfaches Schwenken um die Achse **32** der Walzen **39.** Die Walzen **39** erzeugen die Längsnuten **37** und Längsstege **31.** Das Walzen erfolgt so lange, bis der Halbling **30** von den Walzen **39** ausgeworfen wird, wodurch an dem in Vorschubrichtung **41** vorderen Ende **36** die Längsnuten **37** offen ausgebildet werden.

Das Walzen **39** der Längsnuten **37** kann auch mit der hinteren Stirnseite **36** bzw. dem offenen Ende der Längsnuten **37** begonnen werden. Der Rohling **29** wird in der Walzrichtung **41** eingeführt und dabei umgeformt, bis die Walzen **39** den Abschnitt **33** erreichen. Die Walzen **39** werden in die nicht umformende Position verschwenkt und der Halbling **30** entnommen.

Alternativ zu dem Walzen, können die Längsnuten in den Rohling mittels Fließpressen eingebracht werden. Eine Matrize hat eine trichterförmig zulaufende Öffnung. Die Öffnung verjüngt sich bis auf einen sternförmigen Querschnitt entsprechend dem Komplementär oder Negativform zu dem strukturierten Abschnitt des Halblings. Die Trichterform der Matrize kann komplementär zu dem Übergangsbereich sein, vorzugsweise ist die Matrize so lange wie der Übergangsbereich. Ein Nutboden steigt vorzugsweise durchgehend kontinuierlich in dem Übergangsbereich an. Die Form des Nutbodens längs der Achse kann kreissegmentförmig oder geradlinig ansteigend sein. Das Fließpressen erfolgt bei Raumtemperatur.

Die Längsnuten **37** und die Längsstege **31** des Halblings **30** werden anschließend in einem zweiten Werkzeuggerüst verdrallt. Fig. 8 zeigt schematisch den Halbling **30** während das zweite Werkzeug die Wendel **3** in den Halbling **30** einformt. Das zweite Werkzeug hat auf einer Arbeitsachse **46** und längs einer Arbeitsrichtung **47** aufeinanderfolgend eine (Umform-) Matrize **48** (Fig. 9) und eine (Stütz-) Matrize **49** (Fig. 10).

Die Umformmatrize **48** hat eine längs der Arbeitsachse **32** engste Stelle, die im Wesentlichen der Negativform des Sternabschnitts **34** entspricht. Die Stützmatrize **49** hat vorzugsweise einen längs der Arbeitsachse **46** gleichbleibenden, hohlen Querschnitt, der die Negativform des Sternabschnitts **34** ist. Die Umformmatrize **48** kann gegenüber der Stützmatrize **49** um die Arbeitsachse **46** geschwenkt werden. In einer Grundstellung sind der Querschnitt an der engsten Stelle der Umformmatrize **48** und der Querschnitt der Stützmatrize **49** in die gleiche Winkelstellung orientiert, d.h. bei einer Projektion längs der Arbeitsrichtung **47** überdeckt der geringste hohle Querschnitt der Umformmatrize '**48** vollständig den hohlen Querschnitt der Stützmatrize **49.** Symbolisch deuten eine Markierung **50** auf der Umformmatrize **48** und eine Markierung **51** auf der Stützmatrize **49** die Winkelstellung an. In der Grundstellung weisen die beiden Markierungen aufeinander zu. Die beiden Matrizen **48, 49** werden in die Grundstellung verschwenkt. Der Sternabschnitt **34** des Halbling **30** wird bis angrenzend an den unstrukturierten Abschnitt **33** in der Arbeitsrichtung **47** in die Umformmatrize **48** und die Stützmatrize **49** eingeführt. Der Halbling **30** wird dabei nicht verformt. Die Umformmatrize **48** kann in der Drehrichtung **52** an dem Halbling **30** anliegen. Die Stützmatrize **49** kann entgegen der Drehrichtung **52** an dem Halbling **30** anliegen.

Das Verdrallen beginnt nahe dem unstrukturierten Abschnitt **33** des Halblings **30** und wird in Richtung zu der hinteren Stirnfläche **36** des Halblings **30** fortgesetzt. Die Umformmatrize **48** wird gegenüber der Stützmatrize **49** in einer Drehrichtung **52** verschwenkt. Der Halbling **30** wird zwischen der Umformmatrize **48** und der Stützmatrize **49** tordiert, wobei der Halbling **30** in der Drehrichtung **52** an der Umformmatrize **48** und der Halbling **30** entgegen der Drehrichtung **52** an der Umformmatrize **48** anliegt. Das Schwenken ist symbolisch anhand der beiden nun versetzten Markierungen **50, 51** dargestellt. Die Drehrichtung **52** ist in der Arbeitsrichtung **47** betrachtet beispielsweise gegenläufig zum Uhrzeigersinn, um eine Wendel **3** mit dem üblichen Drehsinn **5** herzustellen.

Der Sternabschnitt **34** des Halblings **30** wird entgegen der Arbeitsrichtung **47** durch die beiden Matrizen **48, 49** gezogen. Die beiden Matrizen **48, 49** bleiben dabei in einem festen axialen Abstand. Beispielsweise berührt die Stützmatrize **49** durchgehend die Umformmatrize **48.** In einer anderen Ausgestaltung ist ein fester Spalt **53** vorgesehen. Alternativ zu einem Ziehen an dem Halbling **30** können die beiden Matrizen **48, 49** gegenüber dem umgebenden Raum bewegt werden. Die beiden Matrizen **48, 49** sind während des Abziehens wie oben beschrieben verschwenkt. Der relative Schwenkwinkel **54,** um welchen die Umformmatrize **48** gegenüber der Grundstellung verschwenkt ist, kann konstant sein. Der Schwenkwinkel **54** ist ungleich Null und zumindest so groß, dass der Sternabschnitt **34** zwischen der Umformmatrize **48** und der Stützmatrize **49** plastisch verformt wird. Ein geeigneter Schwenkwinkel **54** kann von dem verwendeten Stahl des Halblings **30,** der gewünschten Wendelsteigung **19** und dem Spalt **53** abhängen. Ein geeigneter Schwenkwinkel **54** liegt beispielsweise im Bereich zwischen 10 Grad und 90 Grad, vorzugsweise geringer als 50 Grad, vorzugsweise ist die Summe des Schwenkwinkels **54** und der gewünschten Wendelsteigung **19** zwischen 80 Grad und 100 Grad. Der Schwenkwinkel **54** kann auch während des Abziehens variiert werden, um beispielsweise eine größere Wendelsteigung **19** nahe des Bohrkopfs **2** zu realisieren.

Der Halbling **30** wird durch das Verdrallen kalt umgeformt. Der Halbling **30** hat anfangs des Verdrallens etwa Raumtemperatur. Das Verdrallen kann den Halbling **30** erwärmen, jedoch bleibt seine Temperatur weit unter der Rekristallisationstemperatur des Stahls. Typischerweise erfolgt das Verdrallen bei einer Temperatur von 10 Grad Celsius (°C) bis 80°C.

Das dem Verdrallen unmittelbar vorausgehende Walzen **39** ist ebenfalls ein kaltes Umformverfahren, welches zu einer verringerten Duktilität der Oberfläche führt. Dennoch wird das Verdrallen unmittelbar mit dem kaltumgeformten Halbling **30** mit der verfestigten Oberfläche durchgeführt.

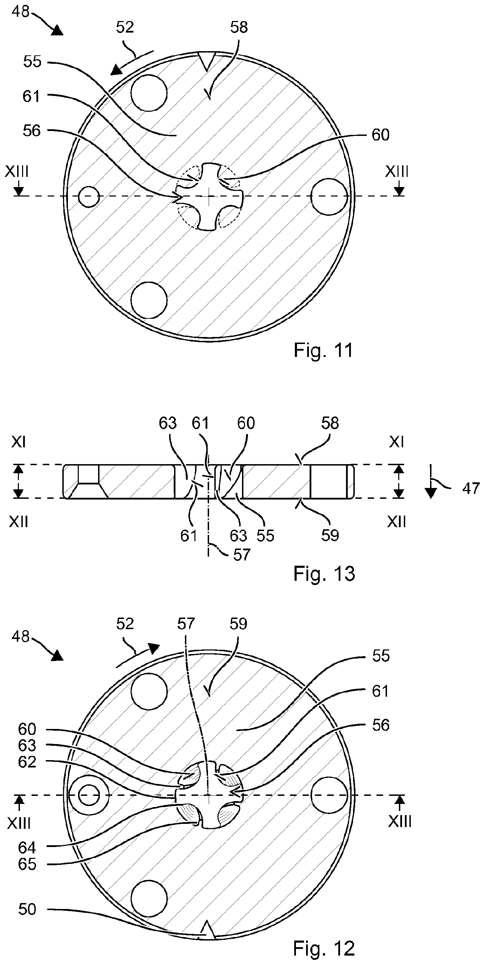

Die Umformmatrize **48** hat einen Grundkörper **55** beliebiger Gestalt, beispielsweise zylindrisch (Fig. 9). Ein profilierter Hohlraum **56** verläuft längs einer Matrizenachse **57,** z.B. der Zylinderachse, von einer Vorderseite **58** (Fig. 11) bis zu einer Rückseite **59** (Fig. 12) des Grundkörpers **55.** Die Umformmatrize **48** wird mit ihrer Vorderseite **58** der vorderen Stirnseite **35** des Halblings **30** und der Rückseite **59** der hinteren Stirnseite **36** zugewandt orientiert auf den Halbling **30** aufgeschoben. Die Matrizenachse **57** fällt mit der Längsachse **32** des Halblings **30** zusammen.

Der Hohlraum **56** wird von der Vorderseite **58** in Richtung zu der Rückseite **59** kontinuierlich größer, d.h. in der Arbeitsrichtung **47.** Die vordere Öffnung an der Vorderseite **58** hat den engsten hohlen Querschnitt; die hintere Öffnung an der Rückseite **59** hat den größten hohlen Querschnitt Die vordere Öffnung ist sternförmig. Die Sternform entspricht weitgehend dem Querschnitt des Sternabschnitts **34** des Halblings **30.** Die vordere Öffnung ist die Negativform zu dem Querschnitt durch die Längsstege **31** und die Längsnuten **37.** Der Hohlraum **56** hat in die Drehrichtung **52** weisende nachlaufende Innenflächen **60** und entgegen der Drehrichtung **52** weisende vorauslaufende Innenflächen **61.** Der beispielhafte Hohlraum **56** mit vier Spitzen **62** hat vier nachlaufende Innenflächen **60** und vier vorauslaufende Innenflächen **61,** die abwechselnd aufeinanderfolgend den Hohlraum **56** umschließen. Die nachlaufenden Innenflächen **60** enden in der Drehrichtung **52** betrachtet jeweils an den Spitzen **62,** die vorauslaufenden Innenflächen **61** beginnen an den Spitzen des sternförmigen vorderen Öffnung (vgl. Fig. 11).

Die vorauslaufenden Innenflächen **56** sind vorzugsweise parallel zu der Matrizenachse **57.** Die vorauslaufenden Innenflächen **56** sind vorzugsweise die Negativform zu den in die Drehrichtung **52** weisenden Außenflächen des Sternabschnitts **34** des Halblings **30.** Der Halbling **30** kann somit flächig an den vorauslaufenden Innenflächen **56** anliegen und an den vorauslaufenden Innenflächen **56** gleitend entlang der Matrizenachse **57** eingeführt werden. Die nachlaufenden Innenflächen **55** steigen wendelförmig von der Vorderseite **58** in der Drehrichtung **52** an. Die nachlaufenden Innenflächen **55** entfernen sich somit den gegenüberliegenden, vorauslaufenden Innenflächen **56** in der Arbeitsrichtung **47.** Die nachlaufenden Innenflächen **55** können sich in der Drehrichtung **52** an die Wendelstege **12** der herzustellenden Wendel **3** anschmiegen. Die nachlaufenden Innenflächen **60** haben die gleiche Chiralität (Händigkeit) wie die herzustellende Wendel **3,** vorzugsweise rechtshändig. Ein Längsschnitt durch den Hohlraum **56** entlang der Matrizenachse **57** und in der Ebene XIII-XIII ist in Fig. 13 gezeigt.

Der Grundkörper **55** hat zu der Matrizenachse **57** vorstehende Rampen **63.** Die Rampe **63** hat eine Fußfläche, die durch die Vorderseite **58** gebildet ist. Eine zu der Fußfläche parallele Kopffläche begrenzt die Rampe **63** an der Rückseite **59.** Die Fußfläche ist größer als die Kopffläche. Die Rampe **63** verjüngt sich kontinuierlich in der Arbeitsrichtung **47.** Die vorauslaufende Innenfläche **61** begrenzt die Rampe **63** entgegen der Drehrichtung **52.** Die vorauslaufende Innenfläche **61** ist vorzugsweise parallel zu der Matrizenachse **57.** Die nachlaufende Innenfläche **60** begrenzt die Rampe **63** in der Drehrichtung **52.** Die Rampe **63** fällt in der Drehrichtung **52** ab. Die Rampe **63** ist an ihrer in Drehrichtung **52** vorderem Ende **64** so hoch wie die Umformmatrize **48** und an ihrem in Drehrichtung **52** hinteren Ende **65** schmal.

Die Rampen **63** sind in gleichen Winkelabständen um die Matrizenachse **57** angeordnet, beispielsweise in Winkelabständen von 90 Grad. Die Rampen **63** können identisch ausgebildet sein, insbesondere sind über die Matrizenachse **57** diametral liegend angeordnete Rampen **63** identisch. In einer Ausgestaltung können die Rampen **63** unterschiedliche radiale Abmessungen aufweisen, z.B. ist deren radialer Abstand zu der Matrizenachse **57** verschieden.

Die symbolische Markierung **50** zeigt die Winkelorientierung einer Spitze **62** des sternförmigen Hohlraums **56** an. Die Position der Markierung **50** ist willkürlich, ebenso das Anbringen einer Markierung **50** unmittelbar auf der Umformmatrize **48.** Die Winkelorientierung der Umformmatrize **48** und deren Hohlraum **56** sind einer Steuerung für das Werkzeug bekannt.

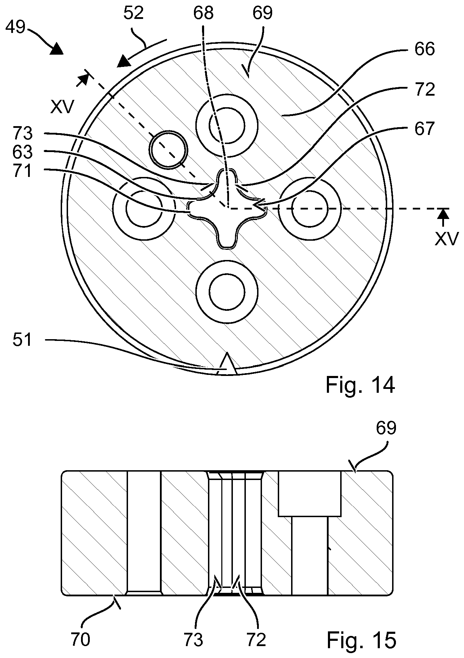

Die Stützmatrize **49** hat einen Grundkörper **66** beliebiger Gestalt, beispielsweise zylindrisch (Fig. 10). Ein profilierter Hohlraum **67** verläuft längs einer Matrizenachse **68,** z.B. der Zylinderachse, von einer Vorderseite **69** (Fig. 14) bis zu einer Rückseite **70** des Grundkörpers **66.** Die Stützmatrize **49** wird nach der Umformmatrize **48** auf den Sternabschnitt **34** des Halblings **30** aufgeschoben, bis angrenzend an die Umformmatrize **48.** Die Umformmatrize **48** liegt an der Rückseite **59** der Umformmatrize **48** gegenüber. Die Matrizenachse **68** der Stützmatrize **49** fällt mit der Längsachse **32** des Halblings **30** zusammen. Eine Rückseite **70** der Stützmatrize **49** zeigt in die Arbeitsrichtung **47.**

Die Vorderseite **69** und die Rückseite **70** der Stützmatrize **49** sind im Wesentlichen gleich. Der profilierte Hohlraum **67** hat einen längs der Matrizenachse **68** gleichbleibenden Querschnitt. Der Querschnitt ist sternförmig mit hier beispielhaft vier Spitzen **71** und ist im Wesentlichen die Negativform zu dem bearbeiteten Abschnitt **34** Sternabschnitt **34** des Halblings **30.** Der Querschnitt entspricht weitgehend der Öffnung an der Rückseite **59** der Umformmatrize **48.**

Der Hohlraum **67** wird durch Innenflächen **72,** die in eine Drehrichtung **52** weisen, und Innenflächen **73,** die entgegen der Drehrichtung **52** weisen, umschlossen. Die Innenflächen **72, 73** sind parallel zu der Matrizenachse **68.** Die gegenüberliegenden Innenflächen **72, 73** können spiegelbildlich geformt sein.

Ein Längsschnitt durch den Hohlraum **67** ist entlang dem Schnitt XV-XV in Fig. 15 gezeigt.

Die symbolische Markierung **51** zeigt die Winkelorientierung einer Spitze **71** des sternförmigen Hohlraums **67** an. Die Position der Markierung **51** ist an sich willkürlich, ebenso das Anbringen einer Markierung **51** unmittelbar auf der Stützmatrize **49.** Die Winkelorientierung der Stützmatrize **49** und deren Hohlraum **67** sind einer Steuerung für das Werkzeug bekannt.

Das zweite Werkzeuggerüst hat auf der Arbeitsachse **46** angeordnet einen axial beweglichen Greifer **74,** die Umformmatrize **48** und die Stützmatrize **49.**

Der Greifer **74** hält den Halbling **30** auf der Arbeitsachse **46.** Der Greifer **74** kann durch einen Antrieb **75** längs der Arbeitsachse **46** vor- und zurückbewegt werden. Der Antrieb **75** ist beispielsweise ein pneumatischer, hydraulischer Antrieb oder ein mechanischer Antrieb mit einem Schneckenvortrieb. Der Greifer **74** kann den Halbling **30** aufnehmen und in die beiden Matrizen **48, 49** weitgehend kraftlos einführen. Der Greifer **74** hat eine ausreichende Kraft, um den Halbling **30** aus den zueinander verschwenkten Matrizen **48, 49** herauszuziehen. Der Greifer **74** kann beim Herausziehen den Halbling **30** in dem Drehsinn **5** drehend antreiben, um das Tordieren durch die Umformmatrize **48** zu unterstützen.

Der Drehantrieb **76** dreht während des Herausziehens kontinuierlich den Greifer **74** in die Drehrichtung **52.** Eine Drehzahl des Drehantriebs **76** ist mit dem Vorschub des axialen Antriebs **75** gekoppelt. Der Drehantrieb **76** dreht den Halbling **30** einmal um 360 Grad während der Vorschub den Halbling **30** um das der Anzahl der Wendelgänge entsprechende Vielfache der Ganghöhe **20** der Wendel **3** verschiebt.

Wenigstens eine der beiden Matrizen **48, 49** ist um die Arbeitsachse **46** verschwenkbar. Beispielsweise ist die Umformmatrize **48** mit einem Schwenkantrieb **77** versehen.

Die Umformmatrize **48** und die Stützmatrize **49** können in der Grundstellung angeordnet werden. Bei den beispielhaft mit den Markierungen **50, 51** versehenen Matrizen **48, 49** weisen die Markierungen **50, 51** in der Grundstellung in die gleiche Richtung, z.B. illustriert weisen beide Markierungen **50, 51.** Die Öffnung des Hohlraums **56** an der Vorderseite **58** der Umformmatrize **48** und die Öffnung des Hohlraums **67** an der Vorderseite **69** der Stützmatrize **49** sind gleich orientiert. So zeigen deren Spitzen **62, 71** in die gleichen Winkelrichtungen. Bei den beispielhaften Matrizen **49** liegen die in die Drehrichtung **52** weisenden Innenflächen **60** der Umformmatrize **48** und die in die Drehrichtung **52** weisenden Innenflächen **72** in einer Flucht.

Die Grundstellung zeichnet sich durch die relative Winkelorientierung der in die Drehrichtung 52 weisende, nachlaufende Innenfläche **60** der Umformmatrize **48** und die entgegen der Drehrichtung **52** weisende Innenfläche **73** der Stützmatrize **49** aus. Die beiden genannten, gegenüberliegenden Innenflächen **60, 73** begrenzen ein Hohlprofil **67,** das dem Querschnitt durch die Längsstege **31** entspricht. Der Längssteg **31** kann somit längs der Matrizenachsen **57, 68** zwischen den beiden Innenflächen **60, 73** kraftlos eingeschoben werden.

Die Umformmatrize **48** kann gegenüber der Stützmatrize **49** in die Drehrichtung **52,** um einen Schwenkwinkel **54** aus der Grundstellung verschwenkt werden. Hierbei ist es unerheblich, ob die Umformmatrize **48** oder die Stützmatrize **49** gegenüber dem umgebenden Raum verschwenkt wird. Das Verschwenken kann mittels eines geeigneten Schwenkantriebs 77 erfolgen, welcher das notwendige Drehmoment zum Tordieren aufbringen kann. Der Schwenkantrieb **77** greift beispielsweise in Aussparungen des Grundkörpers 55bz ein.

Der Schwenkwinkel **54** ist in der Grundstellung gleich Null. Der Schwenkwinkel **54** ist beispielhaft anhand der beiden Markierungen **50, 51** dargestellt. In einer verschwenkten Stellung ist der Schwenkwinkel **54** größer Null.

In der verschwenkten Stellung ist das von der in die Drehrichtung **52** weisenden, nachlaufenden Innenfläche **60** der Umformmatrize **48** und die entgegen der Drehrichtung **52** weisenden Innenflächen **73** der Stützmatrize **49** begrenzte Hohlprofil **67** geringer als der Querschnitt des Längsstegs **31.** Der in der Umformmatrize **48** liegende Teil des Längsstegs **31** wird hierdurch in die Drehrichtung **52** tordiert.

Ein geeigneter Schwenkwinkel **54** liegt beispielsweise im Bereich zwischen 10 Grad und 90 Grad, vorzugsweise geringer als 50 Grad. Der Schwenkwinkel wird vorzugsweise während des Abziehens der beiden Matrizen **48, 49** von dem Halbling **30** variiert. Der Schwenkwinkel verringert sich insbesondere angrenzend an den unstrukturierten Abschnitt **33** und das hintere Ende **36** auf Null.

## Patentansprüche

1. Herstellungsverfahren für einen Bohrer mit einer Wendel (3):
kaltes Umformen eines stabförmigen Rohlings (29) in einen Halbling (30) mit drei oder mehr geradlinigen, längs einer Längsachse (6) des Halblings (30) verlaufenden Längsstegen (31),
Einführen der Längsstege (31) des Halblings (30) in eine erste Matrize (48) und eine zweite Matrize (49) in einer Arbeitsrichtung (47), wobei die erste Matrize (48) in einer Drehrichtung (52) um die Längsachse (6) an den Längsstegen (31) anliegt und die zweite Matrize (49) entgegen der Drehrichtung (52) an den Längsstegen (31) anliegt, Verschwenken der ersten Matrize (48) in der Drehrichtung (52) gegenüber der zweiten Matrize (49) zum Tordieren der Längsstege (31) zwischen der ersten Matrize (48) und der zweiten Matrize (49),
Ziehen der Längsstege (31) des Halblings (30) durch die verschwenkte erste Matrize (48) und die zweite Matrize (49) entgegen der Arbeitsrichtung (47) zum Verdrallen der Längsstege (31) und
Anbringen eines Bohrkopfs (2) an dem in der Arbeitsrichtung (47) hinteren Ende (36).

2. Herstellungsverfahren nach Anspruch 1, **dadurch gekennzeichnet, dass** die erste Matrize (49) in die Drehrichtung (52) weisende Innenflächen (60) aufweist, die wendelförmig gestaltet sind.

3. Herstellungsverfahren nach Anspruch 1 oder 2, **dadurch gekennzeichnet, dass** die erste Matrize (48) entgegen der Drehrichtung (52) weisende Innenflächen (61) aufweist, die parallel zu der Arbeitsrichtung (47) sind.

4. Herstellungsverfahren nach einem der vorhergehenden Ansprüche, **dadurch gekennzeichnet, dass** der Halbling (30) während des Ziehens aus den Matrizen (48, 49) in der Drehrichtung (52) gedreht wird.

5. Herstellungsverfahren nach einem der vorhergehenden Ansprüche, **dadurch gekennzeichnet, dass** die erste Matrize (49) gegenüber der zweiten Matrize (49) um einen Schwenkwinkel (54) verschwenkt wird, wobei während des Verschiebens der beiden Matrizen (48, 49) der Schwenkwinkel (54) während eines ersten Abschnitts (17) der Wendel (3) kontinuierlich erhöht und während eines letzten Abschnitt (16) der Wendel (3) kontinuierlich auf Null verringert wird.

6. Werkzeuggerüst zum Herstellen einer Wendel (3) für einen Bohrer (1) mit in einer Arbeitsrichtung (47) aufeinanderfolgend auf einer Arbeitsachse (46) angeordneten ersten Matrize (48) und zweiten Matrize (49)
wobei die erste Matrize (48) an einer von der zweiten Matrize (49) abgewandten Vorderseite (58) einen sternförmigen hohlen Querschnitt hat, der dem Negativbild des Querschnitts der Wendel (3) des Bohrers (1) entspricht,
wobei die zweite Matrize (49) einen sternförmigen hohlen Querschnitt hat, der dem Negativbild des Querschnitts der Wendel (3) des Bohrers (1) entspricht,
einem Schwenkantrieb (77), welcher die erste Matrize (48) gegenüber der zweiten Matrize (49) in eine Grundstellung verschwenken kann, in welcher der sternförmige hohle Querschnitt der Vorderseite (59) der ersten Matrize (48) und der sternförmige hohle Querschnitt der zweiten Matrize (49) gleich orientiert sind, und aus der Grundstellung in eine Drehrichtung (52) um einen Schwenkwinkel (54) verschwenken kann,
einem axialen Antrieb (75), welcher einen Halbling (30) längs der Arbeitsachse (46) aus der ersten Matrize (48) und der zweiten Matrize (49) ziehen kann.

7. Werkzeuggerüst nach Anspruch 6, **dadurch gekennzeichnet, dass** der hohle Querschnitt der ersten Matrize (49) längs der Arbeitsrichtung (47) zumindest entgegen der Drehrichtung (52) zunimmt.

8. Werkzeuggerüst nach Anspruch 6 oder 7 **dadurch gekennzeichnet, dass** die erste Matrize (48) in der Drehrichtung (52) weisende Innenflächen (60) aufweist, die wendelförmig gestaltet sind.

9. Werkzeuggerüst nach Anspruch 7 oder 8, **dadurch gekennzeichnet, dass** die erste Matrize (48) entgegen der Drehrichtung (52) weisende Innenflächen (61) aufweist, die parallel zu der Arbeitsachse (46) orientiert sind.

10. Werkzeuggerüst nach Anspruch 6 bis 9, **dadurch gekennzeichnet, dass** die erste Matrize (48) entgegen der Drehrichtung (52) weisende Innenflächen (61) aufweist, die parallel zu der Arbeitsachse (46) orientiert sind.

11. Werkzeuggerüst nach Anspruch 6 bis 10, **gekennzeichnet durch** einen mit dem axialen Antrieb (75) gekoppelten Drehantrieb (76) zum Drehen des Halblings (30) in die Drehrichtung (52) während des Ziehens des Halblings (30) entgegen der Arbeitsrichtung (47).

## Claims

1. Production method for a drill having a helix (3):
cold forming a rod-shaped blank (29) into a semifinished product (30) having three or more rectilinear longitudinal webs (31) running along a longitudinal axis (6) of the semifinished product (30),
introducing the longitudinal webs (31) of the semifinished product (30) into a first die-plate (48) and a second die-plate (49) in a working direction (47), wherein the first die-plate (48) lies against the longitudinal webs (31) in a direction of rotation (52) about the longitudinal axis (6) and the second die-plate (49) lies against the longitudinal webs (31) counter to the direction of rotation (52),
pivoting the first die-plate (48) in the direction of rotation (52) in relation to the second die-plate (49) in order to twist the longitudinal webs (31) between the first die-plate (48) and the second die-plate (49),
pulling the longitudinal webs (31) of the semifinished product (30) through the pivoted first die-plate (48) and the second die-plate (49) counter to the working direction (47) in order to twist the longitudinal webs (31), and
attaching a drill head (2) at the rear end (36) in the working direction (47).

2. Production method according to Claim 1, **characterized in that** the first die-plate (49) has inner surfaces (60) which face in the direction of rotation (52) and are configured helically.

3. Production method according to Claim 1 or 2, **characterized in that** the first die-plate (48) has inner surfaces (61) which face counter to the direction of rotation (52) and are parallel to the working direction (47).

4. Production method according to one of the preceding claims, **characterized in that** the semifinished product (30) is rotated in the direction of rotation (52) while being pulled out of the die-plates (48, 49).

5. Production method according to one of the preceding claims, **characterized in that** the first die-plate (49) is pivoted about a pivot angle (54) in relation to the second die-plate (49), wherein, during the displacement of the two die-plates (48, 49), the pivot angle (54) is increased continuously during a first portion (17) of the helix (3) and is reduced continuously to zero during a final portion (16) of the helix (3).

6. Tool stand for producing a helix (3) for a drill (1), having
a first die-plate (48) and a second die-plate (49) arranged consecutively in a working direction (47) on a working axis (46),
wherein the first die-plate (48) has, on a front side (58) facing away from the second die-plate (49), a star-shaped hollow cross section which corresponds to the negative image of the cross section of the helix (3) of the drill (1),
wherein the second die-plate (49) has a star-shaped hollow cross section which corresponds to the negative image of the cross section of the helix (3) of the drill (1),
a pivoting drive (77) which can pivot the first die-plate (48) in relation to the second die-plate (49) into a basic position, in which the star-shaped hollow cross section of the front side (59) of the first die-plate (48) and the star-shaped hollow cross section of the second die-plate (49) are identically oriented, and can pivot same out of the basic position in a direction of rotation (52) about a pivot angle (54),
an axial drive (75) which can pull a semifinished product (30) out of the first die-plate (48) and the second die-plate (49) along the working axis (46).

7. Tool stand according to Claim 6, **characterized in that** the hollow cross section of the first die-plate (49) increases along the working direction (47) at least counter to the direction of rotation (52).

8. Tool stand according to Claim 6 or 7, **characterized in that** the first die-plate (48) has inner surfaces (60) which face in the direction of rotation (52) and are configured helically.

9. Tool stand according to Claim 7 or 8, **characterized in that** the first die-plate (48) has inner surfaces (61) which face counter to the direction of rotation (52) and are oriented parallel to the working axis (46).

10. Tool stand according to Claims 6 to 9, **characterized in that** the first die-plate (48) has inner surfaces (61) which face counter to the direction of rotation (52) and are oriented parallel to the working axis (46).

11. Tool stand according to Claims 6 to 10, **characterized by** a rotary drive (76), which is coupled to the axial drive (75), for rotating the semifinished product (30) in the direction of rotation (52) while the semifinished product (30) is being pulled counter to the working direction (47).

## Revendications

1. Procédé de fabrication pour un foret doté d'une hélice (3) :
le formage à froid d'une ébauche en forme de barre (29) en un produit semi-fini (30) doté de trois ou plus de trois nervures longitudinales (31) rectilignes, s'étendant le long d'un axe longitudinal (6) du produit semi-fini (30),
l'introduction des nervures longitudinales (31) du produit semi-fini (30) dans une première matrice (48) et une deuxième matrice (49) dans une direction de travail (47), la première matrice (48) s'appliquant contre les nervures longitudinales (31) dans une direction de rotation (52) autour de l'axe longitudinal (6) et la deuxième matrice (49) s'appliquant contre les nervures longitudinales (31) à l'encontre de la direction de rotation (52),
le pivotement de la première matrice (48) dans la direction de rotation (52) par rapport à la deuxième matrice (49) pour tordre les nervures longitudinales (31) entre la première matrice (48) et la deuxième matrice (49),
l'étirement des nervures longitudinales (31) du produit semi-fini (30) à travers la première matrice pivotée (48) et la deuxième matrice (49) à l'encontre de la direction de travail (47) pour torsader les nervures longitudinales (31) et
la disposition d'une tête de forage (2) à l'extrémité (36) arrière dans la direction de travail (47).

2. Procédé de fabrication selon la revendication 1, **caractérisé en ce que** la première matrice (49) comprend des surfaces intérieures (60) dirigées dans la direction de rotation (52), qui sont configurées en forme d'hélice.

3. Procédé de fabrication selon la revendication 1 ou 2, **caractérisé en ce que** la première matrice (48) comprend des surfaces intérieures (61) dirigées à l'encontre de la direction de rotation (52), qui sont parallèles à la direction de travail (47).

4. Procédé de fabrication selon l'une quelconque des revendications précédentes, **caractérisé en ce que** le produit semi-fini (30) est tourné dans la direction de rotation (52) pendant l'étirement à partir des matrices (48, 49).

5. Procédé de fabrication selon l'une quelconque des revendications précédentes, **caractérisé en ce que** la première matrice (49) est pivotée d'un angle de pivotement (54) par rapport à la deuxième matrice (49), pendant le déplacement des deux matrices (48, 49), l'angle de pivotement (54) étant continuellement augmenté pendant une première section (17) de l'hélice (3) et continuellement réduit à zéro pendant une dernière section (16) de l'hélice (3).

6. Châssis d'outil pour la fabrication d'une hélice (3) pour un foret (1) comprenant une première matrice (48) et une deuxième matrice (49) agencées successivement sur un axe de travail (46) dans une direction de travail (47),
la première matrice (48) ayant une section transversale creuse en forme d'étoile sur un côté avant (58) détourné de la deuxième matrice (49), qui correspond à l'image négative de la section transversale de l'hélice (3) du foret (1),
la deuxième matrice (49) ayant une section transversale creuse en forme d'étoile, qui correspond à l'image négative de la section transversale de l'hélice (3) du foret (1),
un entraînement de pivotement (77), qui peut amener la première matrice (48) à pivoter par rapport à la deuxième matrice (49) dans une position de base, dans laquelle la section transversale creuse en forme d'étoile du côté avant (59) de la première matrice (48) et la section transversale creuse en forme d'étoile de la deuxième matrice (49) sont orientées dans le même sens, et à pivoter d'un angle de pivotement (54) à partir de la position de base dans une direction de rotation (52),
un entraînement axial (75), qui peut étirer un produit semi-fini (30) le long de l'axe de travail (46) à partir de la première matrice (48) et de la deuxième matrice (49).

7. Châssis d'outil selon la revendication 6, **caractérisé en ce que** la section transversale creuse de la première matrice (49) augmente le long de la direction de travail (47) au moins à l'encontre de la direction de rotation (52).

8. Châssis d'outil selon la revendication 6 ou 7, **caractérisé en ce que** la première matrice (48) comprend des surfaces intérieures (60) dirigées dans la direction de rotation (52), qui sont configurées en forme d'hélice.

9. Châssis d'outil selon la revendication 7 ou 8, **caractérisé en ce que** la première matrice (48) comprend des surfaces intérieures (61) dirigées à l'encontre de la direction de rotation (52), qui sont orientées parallèlement à l'axe de travail (46).

10. Châssis d'outil selon les revendications 6 à 9, **caractérisé en ce que** la première matrice (48) comprend des surfaces intérieures (61) dirigées à l'encontre de la direction de rotation (52), qui sont orientées parallèlement à l'axe de travail (46).

11. Châssis d'outil selon les revendications 6 à 10, **caractérisé par** un entraînement de rotation (76) couplé à l'entraînement axial (75), pour la rotation du produit semi-fini (30) dans la direction de rotation (52) pendant l'étirement du produit semi-fini (30) à l'encontre de la direction de travail (47).
